# EUROPEAN PATENT APPLICATION

(11) **EP 4 704 002 A1**
(43) Date of publication of application: **04.03.2026**
(21) Application number: 25182844.8
(22) Date of filing: 13.06.2025
(51) Int. Cl.: G06Q 10/20, G06Q 10/0631, G06F 3/16, G06T 19/00

(54) **HOLOGRAPHIC AUTOMATED MAINTENANCE MANUAL (HAMM)**

(30) Priority: 28.08.2024 US 202418817589
(71) Applicant: The Boeing Company, Arlington, VA 22202 (US)
(72) Inventor: SAMPATH, Joses Samuel Sasthrigal, Arlington, 22202 (US); MANI, Surendran, Arlington, 22202 (US); RAMACHANDRAN, Shaam Sundar, Arlington, 22202 (US)
(74) Representative: Bryn-Jacobsen, Caelia

(57) **Abstract**

The present disclosure provides techniques for efficient aircraft maintenance using a holographic automated manual display system. A voice query is received requesting maintenance information from one or more maintenance manuals. The voice query is processed to identify one or more keywords. A content management system (CMS) database is searched for the maintenance information based on the one or more keywords. The maintenance information is displayed via a holographic projection. A message is received that indicate an error in the maintenance information. In response to the interaction, the CMS database is updated to correct the error after validation within the maintenance information.

## Description

### FIELD

Aspects of the present disclosure relate to aircraft maintenance. More specifically, the present disclosure relates to a holographic automated maintenance manual (HAMM) systems.

### BACKGROUND

Conventional paper-based maintenance manuals present significant challenges for technicians, particularly due to their complexity and lack of interactivity. First, these paper-based manuals cannot be updated in real time to reflect the latest information, and the reprinting and distribution may cause delays, leading to the risk of outdated practice being followed. Additionally, conventional manuals lack interactive elements, forcing technicians to rely on passive readings to perform maintenance tasks. For example, performing maintenance often requires technicians to navigate through multiple figures and instructions that are located in different sections of the same manual or across multiple manuals. The process has proven to be difficult, inconvenient, and time-consuming, even with the help of lookup tables, particularly when technicians often need to wear gloves and handle equipment and tools simultaneously. The absence of visual aids in conventional paper-based manuals can significantly hinder understanding, especially for complex maintenance procedures or troubleshooting situations. Consequently, there is a pressing need for more advanced, interactive, and easily updatable maintenance solutions to improve the efficiency of checking manuals while performing aircraft maintenance tasks.

### SUMMARY

The present disclosure provides a method in one aspect, including receiving a voice query requesting maintenance information from one or more maintenance manuals, processing the voice query to identify one or more keywords, searching a content management system (CMS) database for the maintenance information based on the one or more keywords, displaying the maintenance information via a holographic projection, receiving a message that indicates an error in the maintenance information, and, in response to the interaction, updating the CMS database to correct the error after validation within the maintenance information.

Other aspects of this disclosure provide one or more non-transitory computer-readable media containing, in any combination, computer program code that, when executed by the operation of a computer system, performs operations in accordance with one or more of the above methods, as well as systems comprising one or more computer processors and one or more memories containing one or more programs that, when executed by the one or more computer processors, perform operations in accordance with one or more of the above methods.

### BRIEF DESCRIPTION OF THE DRAWINGS

In order to provide a comprehensive understanding of the aforementioned features, one can refer to example aspects that provide a more specific description, as briefly summarized above, some of which are illustrated in the appended drawings.
Figures 1A-1C depict an example environment for the HAMM system, according to some aspects of the present disclosure.
Figure 2 depicts an example workflow for processing and retrieving manual data with holographic displays, according to some aspects of the present disclosure.
Figures 3A-3E depict examples of holographic projections in aircraft maintenance using the HAMM system, according to some aspects of the present disclosure.
Figure 4 depicts an example method for preparing manual data for efficient search and retrieval in the HAMM system, according to some aspects of the present disclosure.
Figure 5 depicts an example method for identifying related manual data for a user query and generating holographic projections in the HAMM system, according to some aspects of the present disclosure.
Figure 6 is a flow diagram depicting an example method for manual data retrieval and holographic display generation, according to some aspects of the present disclosure.
Figure 7 depicts an example computing device configured to perform various aspects of the present disclosure, according to some aspects of the present disclosure.

### DETAILED DESCRIPTION

The present disclosure provide techniques for a holographic automated maintenance manual (HAMM) system that enables technicians to access repair information efficiently and collaboratively through voice or gesture controls. As discussed above, traditional paper-based manuals, or even digital manuals on tablets, are often late to update and difficult to navigate or lookup information. The disclosed HAMM system offers an efficient way to retrieve relevant or cross-referenced maintenance information across various manuals for a user query, and provides dynamic and interactive visualization of this information for easy understanding and implementation.

In one aspect, the HAMM system may connect to a content management system (CMS) where information within the manuals is processed, tagged, and structurally reorganized. For example, within the CMS, text instructions that describe maintenance procedures or safety protocols may be analyzed and tagged using natural language processing (NLP) techniques. In some aspects, the CMS may further generate 3-dimensional (3D) models for machinery or equipment parts mentioned in the manuals, particularly based on the 2D figures or diagrams provided within the manuals. Animations may also be generated to visually depict specific maintenance sequences. The CMS may establish links to connect related information together, such as associating text instructions that describe the same maintenance procedures or equipment parts together, or linking text instructions to corresponding 3D models or animations. When a technician makes a query for specific information within the manuals, the CMS may utilize these tags and links to quickly identify and retrieve all relevant information. The CMS may then send the information to the HAMM for holographic projection. Furthermore, in some aspects, the CMS may regularly update its database to include new information within the manuals. Through regular updates, the HAMM system allows technicians to access the latest procedures and guidelines, keeping them up to date with current maintenance practices.

In one aspect, once the relevant information is retrieved from CMS, the HAMM system may use holographic display technology to project the information into the technician's workspace. The holographic projection may allow the technicians to view and interact with the representations of machinery or equipment parts from any angle. In some aspects, the holographic projection may be adjusted automatically based on the technician's movements within the workspace. For example, if a technician moves closer to or farther from the projection, or walks around it, the system may automatically rotate or scale the projection in real time to provide the optimal (or at least improved) view. In some aspects, instead of or in addition to automatic adjustments, the HAMM system may support manual controls of the projection, such as through voice or gesture commands. These interactive features enhance the utility and flexibility of the system as it allows technicians to manipulate the visualization without physical contact. Additionally, in some aspects, the generated holographic projections may be shared with other users, particularly to facilitate remote expert assistance. The sharing function allows experts to access and edit the visualization collaboratively, and provide updated information and guidance to on-site technicians.

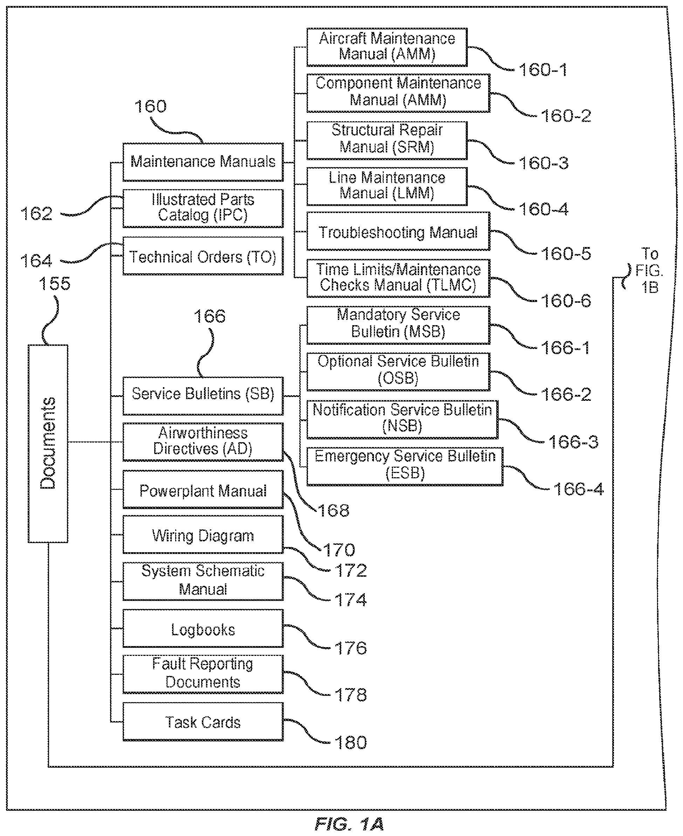

Figures 1A-1C depict an example environment for the HAMM system, according to some aspects of the present disclosure. This figure illustrates how the HAMM system (or device) 110 and the CMS server 115 are configured to interact within a maintenance setting.

As illustrated, the HAMM system (or device) 110 is configured to receive and process maintenance queries (e.g., through voice inputs), generate holographic projections, and provide voice outputs to the user. The CMS server 115 is configured to manage and process manual data, such as generating tags and links for enhanced data retrieval, and create detailed 3D models and/or animations for equipment parts. In some aspects, all the processed manual data may be stored structurally in the CMS database 185 and managed by CMS server 115. When a technician 105 sends a search query to the HAMM system 110 through a voice command, the HAMM system 110 may communicate wirelessly with the CMS server 115 to retrieve the relevant manual data.

As depicted, the HAMM system 110 comprises three modules: a voice input module 120, a holographic projection module 125, and a voice output module 130. The voice input module 120 is configured to process incoming voice inputs (also referred to in some aspects as voice commands or audio commands), analyze them to extract keywords reflecting the query's intent, and interact with the CMS server 115 to retrieve the related manual data. As depicted, the voice input module 120 further comprises four sub-modules: a speech recognition module 120-1, a command processing module 120-2, an action module 120-3, and a feedback/response module 120-4. In some aspects, when a voice input is received, the speech recognition module 120-1 may conduct audio processing to convert spoken words within the input into text. Following that, the command processing module 120-2 may apply natural language processing (NLP) technologies to analyze the text, understand its content and context, and extract keywords that indicate the user's search intents. The command processing module 120-2 may then generate commands for data retrieval based on these keywords. By executing the commands, the action module 120-3 may communicate wirelessly with the CMS server 115 to retrieve related manual data, which may include text descriptions, 3D models for machinery or equipment parts, or animations illustrating maintenance procedures. Once received, the manual data may be processed by the holographic projection module 125, which converts the data into an immersive holographic projection. In some aspects, the holographic projection module 125 may automatically rotate or adjust the projection based on the viewing angle and/or distance of the technician 105. For example, if the technician 105 moves closer to view finer details of an equipment part (e.g., an aircraft engine), the holographic projection module 125 may automatically enlarge the 3D model to enhance visibility and detail. If the technician 105 steps back for a wider view, the holographic projection module 125 may reduce the scale of the projection to show more of the component in a single frame. Additionally, if the technician 105 walks around the workspace with the viewing angle changed, the holographic projection module 125 may rotate the model accordingly to maintain an optimal (or at least improved) view. In some aspects, such as when historical preferences for the technician 105 are saved, the holographic projection module 125 may adjust the display settings automatically based on these saved preferences, such as adjusting the color, font, and size of text, or changing orientation, zoom level, and transparency of 3D models.

In some aspects, the retrieved data may be transformed into verbal instructions by the voice output module 130. These instructions may then be audibly played to the technician 105 to facilitate hands-free operations. The feedback/response module 120-4 may continue to monitor feedback received from technician 105 after the relevant data is retrieved and presented. The feedback may include a confirmation, indicating that the information retrieved from the CMS server 115 accurately addresses the technician's 105 query, or an error handling signal, suggesting discrepancies or the need for additional information. Based on the feedback, the feedback/response module 120-4 may further refine the algorithms for more accurately identifying user intents, and instruct the CMS server 115 to update its database to improve accuracy for future data retrieval.

As illustrated, the HAMM system 110 may further integrate a base 140 and a hand gesture recognition module 135 to enhance the system's usability and flexibility. The base 140 may be magnetic, wheeled, or a fixed type, and provide stability in positioning the HAMM system (or device) in various maintenance environments. The hand gesture recognition module 135 may enable the technician 105 to interact with and adjust the holographic projection through hand gesture commands. In some aspects, these hand gesture commands may allow for a wide range of interactions, such as zooming in or out, rotating the 3D model, repositioning the model to avoid overlaps, navigating through text instructions or guidelines, changing the size, color, or front of text, adjusting visibility settings, and controlling the pace of animations, including pausing, speeding up, or slowing down the movement. Through the hand gesture recognition module 135, the technician may adjust the holographic display to their specific needs and preferences without physical contact. This functionality may significantly enhance the usability of the HAMM system, especially when the technician's hands are occupied.

As illustrated, the CMS server 115 is coupled to the HAMM system 110, and comprises two sub-systems: the content management system (CMS) 145 and the model-based engineering (MBE) system 150. The CMS 145 is configured to organize, tag, and link all manual data to facilitate quick and accurate retrieval of maintenance information. The CMS 145 may ensure that all content within the manuals are digitally accessible and easily searchable, supporting maintenance operations with up-to-date and relevant data. The MBE system 150 is configured to generate 3D visualizations of equipment parts 150-1, which can provide exploded views and/or 360-degree views of these components. These models may be used in conjunction with textual contents within the manuals to provide clear and comprehensive guidelines for maintenance tasks.

As illustrated, the CMS 145 consists of four sub-modules: the manual identification module 145-1, the effectivity mapping/tagging module 145-2, the cross-referencing/linking module 145-3, and the digital conversion module 145-4.

In some aspects, the digital conversion module 145-4 may be configured to scan paper-based manuals (or any updates), convert them into digital text, and format images and diagrams for digital use.

After the digital conversion, in some aspects, the manual identification module 145-1 may process the data to identify and classify different types of content, such as textual content, images, and diagrams. In some aspects, the maintenance manual may include large sections designed for specific systems or components. For example, within the broad category of "Aircraft Engine Maintenance," it may include subsections for each type of aircraft engine or model number, such as "Boeing^{®} 737^{™} Engine Maintenance," "Boeing^{®} 787 Dreamliner^{®} Engine Maintenance." Each of these subsections contains specific maintenance procedures, safety protocols, operational guidelines, and other relevant data applicable to that particular model. In addition to the textual data, each subsection may also include images or diagrams specific to each model, which may then be provided to the MBE system 150 to generate relevant 3D models and/or animations 150-1. The manual identification module 145-1 may identify the subsections within the maintenance manual and categorize the data based on model number.

Following the categorization and the generation of corresponding models, in some aspects, the data (e.g., text instructions, 3D models, and animations) may then be processed by the effectivity mapping/tagging module 145-2 to add relevant tags and/or metadata. The tags may include searchable keywords that provide quick insights into the content and context of the data, such as aircraft model number (e.g., "Boeing^{®} 787 Dreamliner^{®}"), equipment part name (e.g., "Main Landing Gear"), applicability based on certain conditions (e.g., "Above 10,000 Feet Operating Altitude"), revision status (e.g., "Revision 1.2 - June 2024"), or any other contextual data that may affect maintenance procedures (e.g., "Safety-Critical Procedure"). Through the tags/metadata, the CMS server may quickly locate and retrieve the relevant information based on specific queries or conditions.

Once the tagging is complete, in some aspects, the cross-referencing/linking module 145-4 may establish links between related content across the database. For example, the cross-referencing/linking module 145-4 may link different sections of the manual that pertain to the same piece of equipment, or connect textual instructions with corresponding 3D models and/or animations. In some aspects, the links may be established based on tags. For example, data sharing the same or similar keywords (e.g., "Boeing^{®} 787 Dreamliner^{®}," "Main Landing Gear") may be interconnected. By establishing these links, the technician 105 may navigate through related topics without the need to perform multiple searches. The cross-referencing mappings (or links) may be particularly useful for complex maintenance tasks where understanding one part of a system may depend on information found in various sections of the manual.

In some aspects, the processed manual data, along with their associated tags and cross-referencing mappings (or links), may be saved in a remote database 185. The CMS server 115 may access the database 185 to retrieve the relevant maintenance data when it receives a query from the HAMM system 110. When the manuals are updated, whether through revisions, additions, or corrections, these changes may promptly processed by the CMS 145 and reflected in the database 185. The dynamic updating mechanism ensures that the data displayed on the HAMM system 110 is always current, providing the technicians 105 with the most up-to-date guidelines for their maintenance tasks.

As illustrated, a wide range of documents may be processed by the CMS 145 to generate useful data for the HAMM system 110. These documents include, but are not limited to, maintenance manuals 160, illustrated parts catalog (IPC) 162, technical orders (TO) 164, service bulletins (SB) 166, airworthiness directives (AD) 168, powerplant manual 170, wiring diagram 172, system schematic manual 174, logbooks 176, fault reporting documents 178, and task cards 180. As depicted, different types of maintenance manuals 160 may be collaboratively processed by the CMS 145 to provide a comprehensive resource for technicians. Each manual may be designed to fulfill distinct maintenance needs. The maintenance manuals 160 processed include the aircraft maintenance manual (AMM) 160-1 (which provides general aircraft maintenance procedures), the component maintenance manual (CMM) 160-2 (which details maintenance procedures for specific components), the structure repair manual (SRM) 160-3 (which provides guidelines for structural repairs), the line maintenance manual (LMM) 160-4 (which provides routine day-to-day maintenance guide), the troubleshooting manual or Fault Isolation Manual (FIM) 160-5 (which assists in diagnosing issues), and the time limits/maintenance checks manual (TLMC) 160-6 (which outlines maintenance schedules and procedures). Similarly, various types of service bulletins 166 may be processed by the CMS 145. These include mandatory service bulletin (MSB) 166-1 (which addresses safety-critical modifications or repairs), optional service bulletin (OSB) 166-2 (which includes modifications that may enhance performance or ease of maintenance but are optional for implementation), notification service bulletin (NSB) 166-3 (which provides updates for non-critical issues), and emergency service bulletin (ESB) 166-4 (which requires immediate action to address urgent safety issues).

The example environment that depicts the CMS 145 and MBE system 150 being integrated within a single computing device (e.g., the CMS server 115) is provided for conceptual clarity. In some aspects, the CMS 145 and MBE system 150 may be distributed across different computing devices that work collaboratively through wired and/or wireless communication. Such a distributed arrangement may lead to improved performance and easier scalability in response to the varying demands of each system.

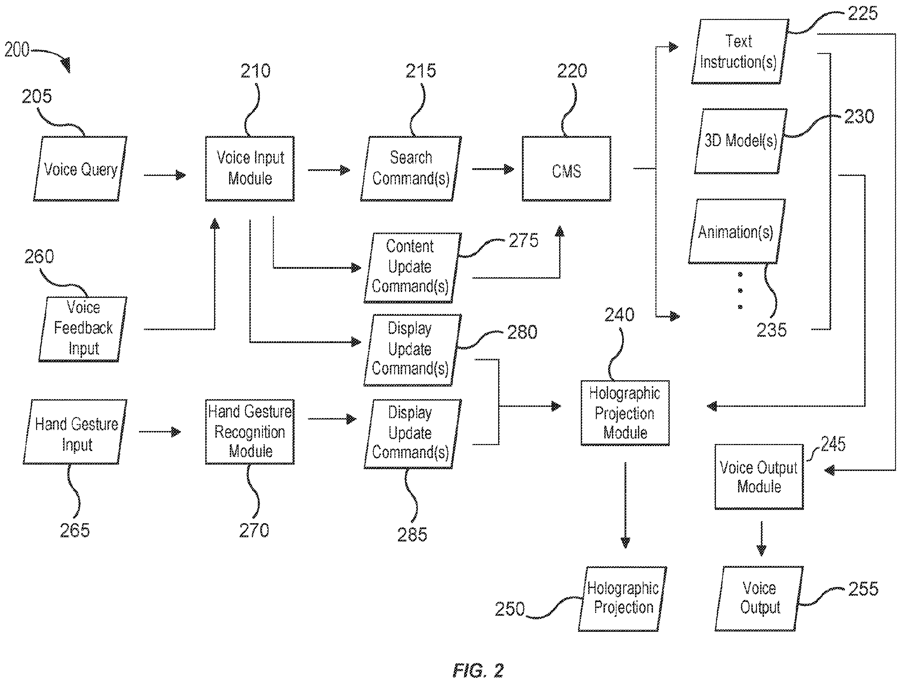

Figure 2 depicts an example workflow 200 for the HAMM system for processing and retrieving manual data with holographic display, according to some aspects of the present disclosure.

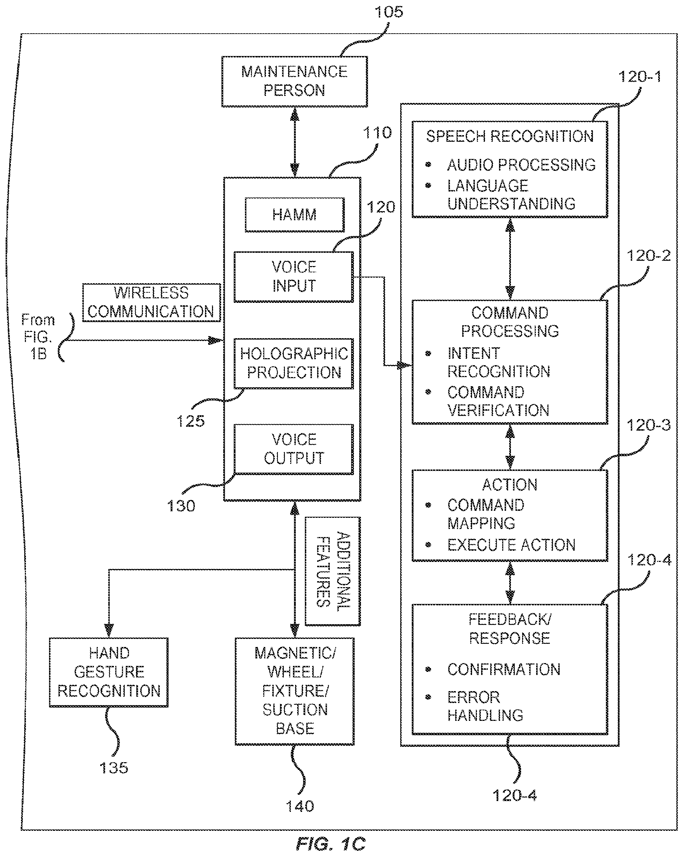

As illustrated, in the workflow 200 a technician (e.g., 105 of Figure 1C) assigned to complete a maintenance task may provide/initiate a voice query 205 to the HAMM system (e.g., 110 of Figure 1C). In some aspects, the voice query 205 may describe the specific information the technician seeks from one or more maintenance manuals (e.g., 160-180 of Figure 1A), which may include details like the aircraft model number or the specific equipment part that needs repair. For example, a proper voice input might be: "Today I'll be working on engines. Can you provide me with the cowling disassembly sequence, including safety measures and cautions, for a Boeing^{®} 737^{™} aircraft?"

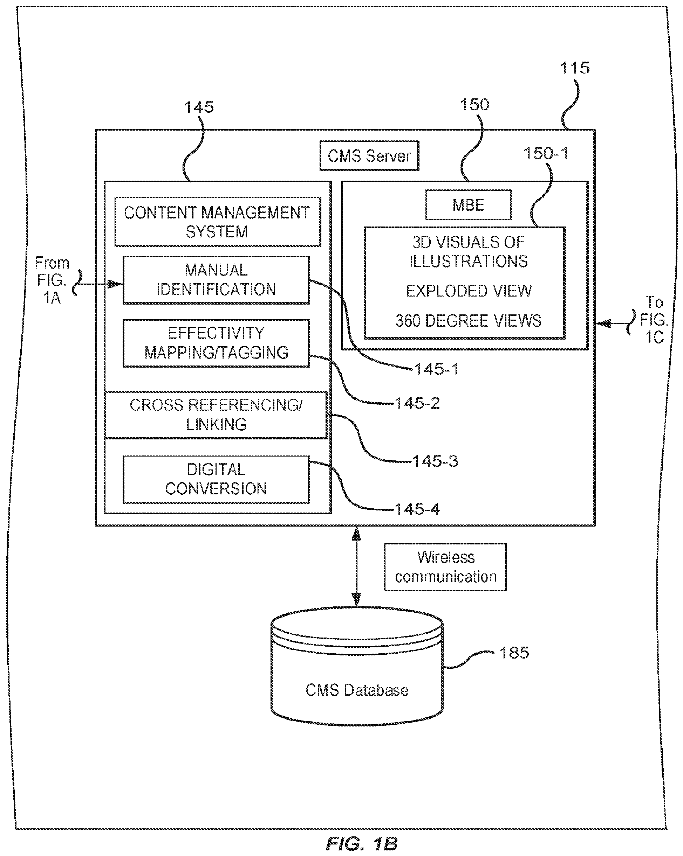

The voice query 205 is received by the voice input module 210 (which may correspond to the voice input module 120 as depicted in Figure 1C) of the HAMM system, which processes the spoken words using speech recognition technologies to convert them into text. The voice input module then uses NLP to understand the context and extract keywords that capture the search intents of the query. In the given example discussed above, the keywords may include "Boeing^{®} 737^{™}," "cowling disassembly," "safety measures," "cautions," and the like. Based on the extracted keywords, the voice input module 210 generates search commands 215 and transmits the commands to the CMS server 220 (which may correspond to the CMS server 115 as depicted in Figure 1B). The CMS server 220, upon receiving the commands 215, may perform a targeted search within its database (e.g., CMS database 185 of Figure 1B) to identify and retrieve maintenance information relevant to the technician's query 205. As discussed in Figure 1, a wide range of manual documents (e.g., 160-180 of Figure 1A) may be processed by the CMS server 220, where digitalized manual data is categorized, tagged, and linked together for efficient retrieval.

As depicted, the maintenance information 225-235 related to the technician's query is identified and retrieved by the CMS server 220 following a thorough search relying on these extracted keywords. As depicted, the CMS server 220 retrieves the relevant maintenance information 225-235 following a thorough search based on these extracted keywords The retrieved information may include various types, including text instructions 225, 3D models 230, animations 235, images (not shown), diagrams (not shown), and other formatted data. For the example query provided above, the relevant maintenance information retrieved from the CMS 220 may include a detailed text guideline for the disassembly sequence of the cowling and/or a 3D model of the aircraft engine with cowling assembly. The instructions may detail steps such as:
Step 1: remove the two screws in the cover plate located at the top rear of the cowling;
Step 2: remove the top cowl forwards by removing six attaching screws, two side pin anchor screws, and four hinge pins;
Step 3: remove the bottom cowl by detaching twelve screws located on the bottom, two screws securing the oil cooler at the top, and disconnecting four hinge pins; note that the oil cooler will remain attached to the airplane, hanging in place by its associated oil hoses.

Following the search, as illustrated, the identified maintenance data is compiled and sent to the holographic projection module 240 (which may correspond to the holographic projection module 125 as depicted in Figure 1C) within the HAMM system. In some aspects, the module 240 may utilize holographic display technology to convert the retrieved data into a dynamic and interactive holographic projection 250. In the provided example, the holographic projection 250 may show the text guideline and/or the 3D model of the aircraft engine to the technician. In some aspects, text elements, such as color, front, or size, within the projection may be scaled based on the technician's distance from the display. The 3D model may rotate in response to the technician's movements around the projection to ensure an optimal (or at least improved) view. In some aspects, the 3D model may offer a 360-degree view of the machinery or equipment part (e.g., the aircraft engine with the cowling). In some aspects, the 3D model may provide an exploded view of the equipment part, allowing for detailed visualization of internal components.

In another example, Figure 2 depicts an example workflow 200 for the HAMM system. In the workflow 200, a technician (e.g., 105 of Figure 1C) assigned to complete a maintenance task initiates a voice query 205 to the HAMM system (e.g., 110 of Figure 1C). The voice query 205 is received by the system's voice input module 210, which processes the spoken words using speech recognition technologies and convert the spoken words into text. The voice input module 210 then uses NLP to understand the context and extract keywords that capture the search intents of the query. Based on these keywords, the voice input module 210 generates search commands 215 and sends the commands to the CMS server 220. Upon receiving the commands 215, the CMS server 220 performs a targeted search within its database to identify and retrieve maintenance information relevant to the technician's query 205. As depicted, the CMS server 220 retrieves the relevant maintenance information 225-235 following a thorough search based on these extracted keywords. The retrieved information may include various formats, including text instructions 225, 3D models 230, animations 235, images (not shown), diagrams (not shown), and other formatted data. The maintenance data is then compiled and sent to the holographic projection module 240, which utilizes holographic display technology to convert the retrieved data into a dynamic and interactive holographic projection 250. After the projection, the technician provides feedback in response to the retrieved data. If the feedback indicates an error or discrepancy within the retrieved maintenance data, the error message is processed by the voice input module 210 to generate content update commands 275, which are then sent to the CMS server 220 to further refine the existing tags and links for improved accuracy

In addition to holographic projection, in some aspects, the text instructions 225 within the retrieved data may further be forwarded to the voice output module 245 (which may correspond to the voice output module 130 as depicted in Figure 1C). The voice output module 245 may then convert these text instructions into voice outputs 255. Through this integration, the technician may receive audible guidance while simultaneously engaging with the holographic display. In the provided example, the technician may receive audible instructions on disassembling the cowling while viewing the corresponding 3D model of the aircraft engine. Through the visual projections and audible instructions, the technician may more quickly understand and follow the maintenance procedures, improving the overall maintenance efficiency.

After the maintenance information is presented through the holographic projection module 240 and/or the voice output module 255, in some aspects, the technician may provide further feedback in response to the retrieved data. In some aspect, the feedback may include a voice input 260, received and processed by the voice input module 210. In some aspects, the feedback may comprise a confirmation, indicating the retrieved data matches the technician's expectation (e.g., the data is what the technician intended to find using the initial query 205). In some aspects, the feedback may highlight an error or discrepancy within the retrieved maintenance data. The error message may then be processed by the voice input module 210 to generate content update commands 275, which are subsequently provided to the CMS server 220 to further refine the existing tags and links for improved accuracy.

In some aspects, the feedback may not concern content updates but rather adjustments to display settings. For example, the voice feedback 260 may be processed by the voice input module 210 to generate commands 280 for altering the display settings of the holographic projection. The commands 280 may then be transmitted to the holographic projection module 240 to adjust the display settings accordingly.

In some aspects, instead of or in addition to using voice inputs 260, adjustments to the display may be achieved through hand gesture inputs 265. The types of hand gestures may include zooming in or out, rotating the 3D models, repositioning the models to avoid overlapping, navigating through text instructions or guidelines, or controlling the pace of animations, including pausing, speeding up, or slowing down the movement. The hand gesture input 265 may be captured by the hand gesture recognition module 270 (which may correspond to the hand gesture recognition module 135 as depicted in Figure 1C), which then generates display update commands 285 for the holographic projection module 240.

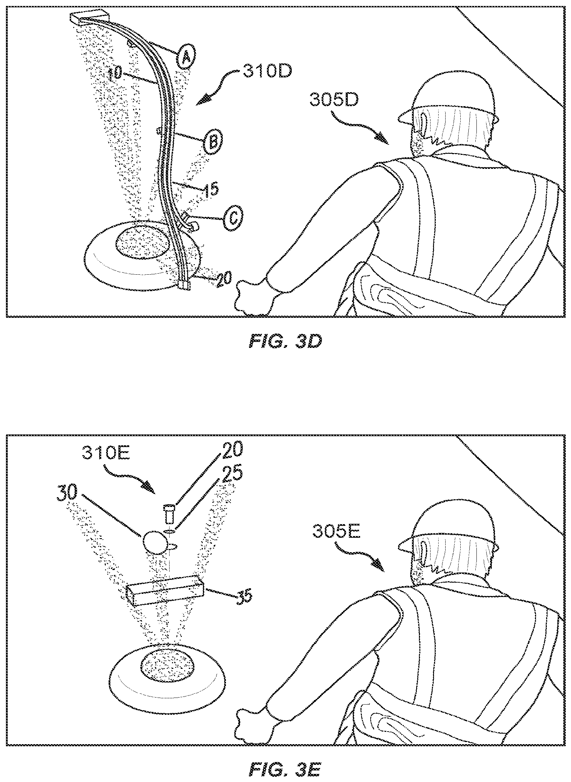

In some aspects, after confirming that the data displayed in the current holographic projection 250 is accurate, the technician may issue a second voice query related to the initial one to request more detailed information about a specific maintenance step or an equipment part. In the provided example, after following the instructions to disassemble the cowling of a specific aircraft engine, the technician may notice a leakage in a tube assembly within the engine. Based on this observation, the technician may send a second voice query, such as "I notice there is a leakage in tube assembly within the aircraft engine; can you provide me with the illustrated parts catalog (IPC) for it?" The voice query may then be processed by the voice input module 210, which correlates the first and second queries and generates corresponding search commands for the CMS server 220. The CMS server 220 may retrieve the requested IPC of the tube assembly and send this information to the holographic projection module 240, which then displays the detailed parts catalog to the technician within a holographic projection. The query process may continue as the technician provides subsequent follow-up queries. For example, if the IPC of the tube assembly reveals that there are three brackets used to secure the tube, each annotated with a respective label, and the technician observes that the tube assembly number "15" in Figure 3D and bracket number "35" in Figure 3E with label "C" is broken, the technician may send a third voice query, such as "Can you show me the exploded view of bracket C?" In response, the CMS server 220 may retrieve the exploded view of the specific bracket and send this visual data to the holographic projection module 240 for display.

In some aspects, once an equipment part (e.g., a bracket and tube) is identified as defective, the voice output module 245 may generate a voice prompt querying the technician whether assistance is needed to check the part list for its availability or to place an order. Such proactive features may significantly streamline the maintenance workflow, allowing technicians to quickly address repairs and replacements without manual intervention to search for part information.

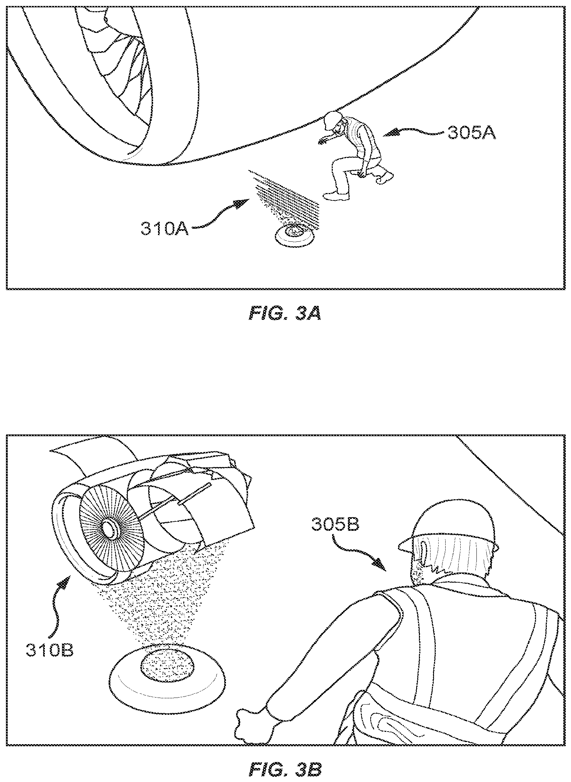

Figures 3A-3E depict examples of holographic projections in aircraft maintenance using the HAMM system, according to some aspects of the present disclosure.

The holographic projection 310A in Figure 3A shows the text instructions for the cowling disassembly sequence of an aircraft engine. The text is presented in a clear, readable format, allowing the technician 305A to easily follow the instructions step by step. In some aspects, these text instructions may be provided to a voice output module (e.g., 130 of Figure 1C), which transforms the text into audible instructions. The voice outputs allow the technician 305A to listen to the steps and continue working hands-free without needing to constantly refer to the visual text.

The holographic projection 310B in Figure 3B shows a 360-degree view of the aircraft engine with cowling assembly. This example view enables the technician 305B to perform a thorough observation and assessment of the engine from all angles.

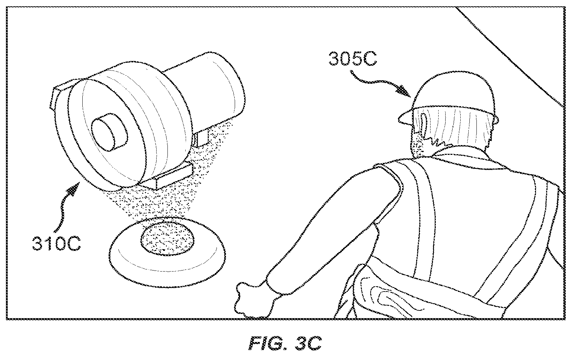

The holographic projection 310C in Figure 3C presents an exploded view of the aircraft engine with the cowling removed. This detailed view helps the technician 305C to see how individual parts within the aircraft engine fit together and identify their exact locations. In some aspects, the 360-degree view and/or exploded view may be generated from a 3D model of the aircraft engine.

In some aspects, the holographic projections 310A-310C in Figures 3A-3C may be generated in response to the technician's initial query regarding the safety measures and procedures for disassembling the cowling of the aircraft engine. An example of the initial query may be: "Can you show me the safe disassembly procedures for the cowling on a Boeing^{®} 737^{™} engine?"

The holographic projection 310D in Figure 3D shows the IPC for a specific tube assembly. In some aspects, the projection 310 may be generated after the technician 305D removes the cowling and detects a potential leakage within the engine. The technician then requests the IPC of the tube assembly using a second query. An example of the second query may be: "There seems to be a leakage in tube assembly within the aircraft engine. Can you pull up the IPC for this part?" As illustrated within projection 310D, there are three brackets used to secure the tube, each annotated with respective labels (e.g., "A", "B", "C").

The holographic projection 310E in Figure 3E presents the IPC of the bracket disassembly sequence to replace the tube assembly item number "15" and bracket item number "35". In some aspects, the projection 310E may be generated following the technician's 305E observation that the bracket labeled "C" within the real aircraft engine is broken, prompting a request for detailed information about the bracket using a third query. An example of the third query may be: "The bracket labeled in 'C' appears to be damaged. Can you show me the detailed IPC for the label 'C'?" As illustrated within the projection 310E, the IPC offers an in-depth view of the bracket's specifications and placement, which helps the technician 305E to plan the following repair or replacement operations.

The example holographic projections depicted in Figures 3A-3E are provided for conceptual clarity. In some aspects, the HAMM system may display various formats of data from the CMS database in holographic form, including, but not limited to, images, diagrams, text, animations, as well as 360-degree views or exploded views of 3D models of aircraft components or assemblies.

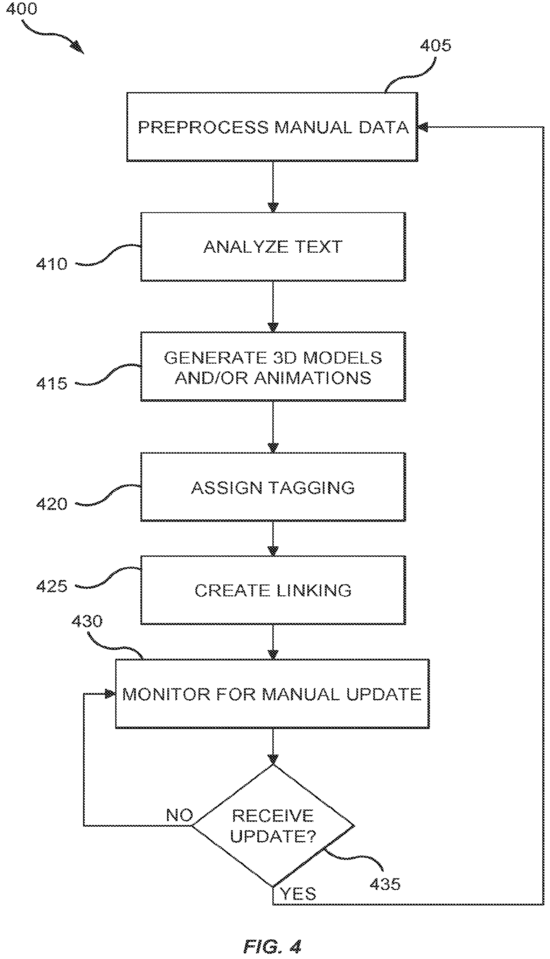

Figure 4 depicts an example method 400 for preparing manual data for efficient search and retrieval in the HAMM system, according to some aspects of the present disclosure. In some aspects, the method 400 may be performed by one or more computing devices, such as the CMS server 115 as depicted in Figure 1B, and the CMS server 220 as depicted in Figure 2.

The method 400 begins at block 405, where a CMS device preprocesses a wide range of manual documents to convert them into digital formats. These documents may include, but are not limited to, maintenance manuals (e.g., AMM, CMM, SRM, LMM, troubleshooting manual, TLMC), illustrated parts catalog (IPC), technical orders (TO), service bulletins (SB) (e.g., MSB, OSB, NSB, and ESB), airworthiness directives (AD), powerplant manual, wiring diagram, system schematic manual, logbooks, fault reporting documents, and task cards. Each document may provide different information for aircraft maintenance and operations. In some aspects, scanning and optical character recognition (OCR) technologies may be used to digitize these documents. The preprocessing operations ensure that all textual and graphical data within these manual documents are accurately captured and transformed into a uniform digital format.

At block 410, the CMS device processes the digitized data to understand its content and context. The digitized data may include textual content, such as descriptions of maintenance procedures or steps, as well as graphical data, such as images or diagrams. In some aspects, for textual content, the analysis may involve using NPL technologies to understand its semantic structure, and extract keywords relevant to its content and context.

In aspects where manuals are designed to cover extensive systems, the text with the manuals may be organized into large sections, such as "Aircraft Engine Maintenance." Within the broad categories, the data may then be divided into subsections for specific aircraft models, such as "Boeing^{®} 737^{™} Engine Maintenance," and "Boeing^{®} 787 Dreamliner^{®} Engine Maintenance." When analyzing the digitized data, the CMS device may categorize the data based on its applicability to specific aircraft models or system requirements, which further improves the accuracy for future data retrieval.

At block 415, the CMS device generates 3D models of aircraft components and/or animations that demonstrate maintenance procedures or how various parts are assembled together. These 3D models and/or animations may be used in conjunction with textual descriptions to provide technicians with a comprehensive understanding of the maintenance tasks.

In some aspects, the 3D models may offer various types of views of machinery or equipment parts, such as a 360-degree view that illustrates all external characteristics (e.g., 310B of Figure 3B), or an exploded view that details the internal components (e.g., 310C of Figure 3C). In some aspects, these models and/or animations may be generated using the graphical data (e.g., images, diagrams) from the digitized manuals. In some aspects, additional data from external sources may be utilized for completing the models and/or animations to ensure accurate and up-to-date representation.

At block 420, the CMS device assigns metadata or tags to both textual and graphical data. In some aspects, the metadata or tags may include searchable keywords such as aircraft model number (e.g., "Boeing^{®} 787 Dreamliner^{®}"), part names (e.g., "Main Landing Gear"), revision status (e.g., "Revision 1.2 - June 2024"), and any other contextual data. The metadata or tags may serve as identifiers that facilitate the quick search and retrieval of specific data based on queries received from maintenance technicians.

At block 425, the CMS establishes cross-referencing links (also referred to in some aspects as mappings) between related data across the CMS database. For example, if different sections within a manual include text descriptions pertaining to the same equipment part, these sections may be linked together to provide a unified view of all related information. Also, if there are text instructions for a specific maintenance procedure, such as removing the cowling from an engine, the text instructions may be linked to a 3D model showing the aircraft engine with its cowling or an animation that demonstrates how the cowling is removed step by step following the instructions.

In some aspects, these links may be established based on tags or metadata. Data sharing the same or similar keywords within its tags or metadata may be linked together. Through these links, the CMS device may pull all relevant and associated information together for a received query, presenting a comprehensive and interconnected response to the maintenance technician. Additionally, in some aspects, the connectivity may further enhance the efficiency of processing subsequent queries, especially if they are related to the initial one, because the relevant information for subsequent queries may has already been identified (or at least partially identified) during the initial check.

At block 430, the CMS device monitors for any updates or changes to the manuals that need to be integrated into the CMS database. In some aspects, these updates may include revisions to existing maintenance procedures, new regulatory requirements, or updates to parts catalogs and diagrams.

At block 435, the CMS device determines whether there has been an update to the manuals. If an update is detected, the method 400 returns to block 405, where the device preprocesses the new data and integrates these updates into the existing database framework (e.g., digitalizing the updates, assigning appropriate tags/metadata, and establishing links to related information). If no updates are found, the method 400 returns to block 430, where the monitoring process continues.

In some aspects, the CMS device may receive feedback regarding the data identified and retrieved for a specific query. The feedback may be provided by a technician who sends the query and views the retrieved data through a holographic projection interface. In some aspects, the feedback may include a confirmation, suggesting that the data retrieved is accurate for the query, or an error signal, indicating that the data is not relevant to the query or that there is a discrepancy between the retrieved data and expected results. When an error signal is received, the CMS device may use the feedback to further update and refine the existing tagging and linking, improving the accuracy of future data retrieval.

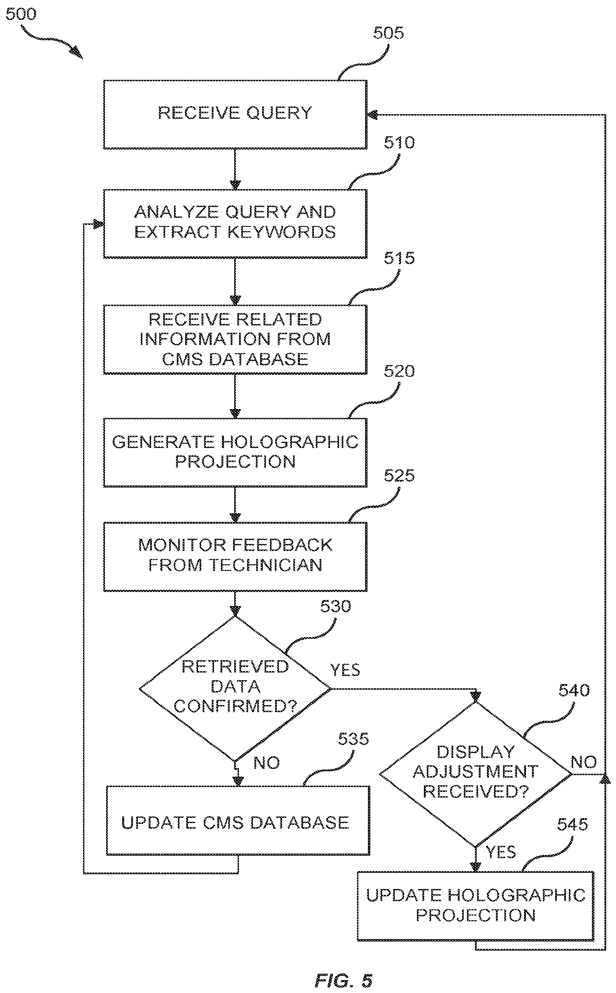

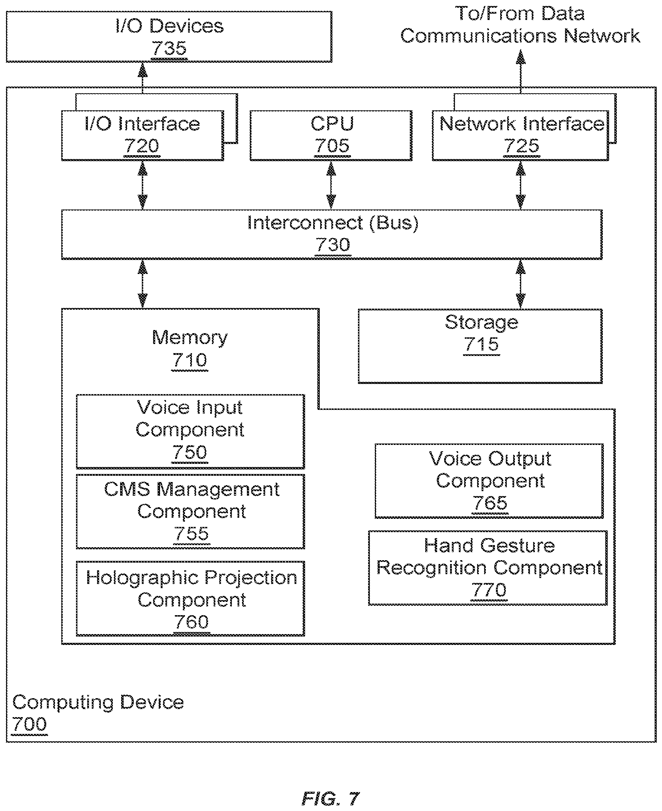

Figure 5 depicts an example method 500 for identifying related manual data for a user query and generating holographic projections in the HAMM system, according to some aspects of the present disclosure. In some aspects, the method 500 may be performed by one or more computing devices or systems, such as the HAMM system 110 as depicted in Figure 1C, and the computing device 700 as depicted in Figure 7.

At block 505, a HAMM device receives a query (e.g., 205 of Figure 2) from a technician (e.g., 105 of Figure 1C). The query is used to request specific information from one or more existing maintenance manuals (e.g., 160-180 of Figure 1A). To facilitate an efficient search, in some aspects, the query may specify an aircraft model number and/or the name of an equipment part that needs repairs. In some aspects, the query may be provided to the HAMM device through a voice input, which allows the technician to remain hands-free for improved safety and efficiency during the maintenance process.

The HAMM device is coupled to a CMS server (e.g., 115 of Figure 1B), which features a database that has structurally organized and saved manual data for efficient access and retrieval. At block 510, the HAMM device processes the query to understand the technician's intent. This may involve transforming spoken words into text using speech recognition technology, followed by applying NLP to understand the semantic meaning of the query. Based on the analysis, the HAMM device extracts relevant keywords required for a targeted search within the CMS database (e.g., 185 of Figure 1B). In some aspects, these keywords may include the aircraft model number, equipment part name and/or reference number, and specific maintenance procedures. For example, when receiving a query requesting safety measures for disassembling the cowling of a Boeing^{®} 737^{™} engine, the keywords may include "Boeing^{®} 737 ^{™}," "engine," "cowling disassembly." Using the extracted keywords, the HAMM device generates search commands (e.g., 215 of Figure 2), directing the CMS server to search its database for related information. The CMS server then utilizes the established tags and links within the database to find all relevant data associated with the keywords, and sends this data back to the HAMM device.

At block 515, the HAMM device receives the retrieved data (e.g., 225-235 of Figure 2) from the CMS database. The retrieved data may vary widely depending on the query and may include text instructions (e.g., 225 of Figure 2) describing maintenance procedures, 3D models (e.g., 230 of Figure 2), images, or diagrams showing specific parts or assemblies, or animations (e.g., 235 of Figure 2) illustrating step-by-step processes. For example, in response to the query about disassembling a Boeing^{®} 737^{™} cowling, the CMS may retrieve a detailed text guideline outlining each step, a 3D model of the Boeing^{®} 737^{™} engine with cowling assembly, and an animation that visually demonstrates the disassembly process.

At block 520, the HAMM device converts the received data into a holographic projection (e.g., 250 of Figure 2), providing the technician with an interactive and immersive way to view the data. For example, if the query involved safety measures for disassembling an aircraft cowling, the text guidelines may be projected within the technician's workspace through a holographic display interface. In some aspects, these text guidelines may be transformed into audible instructions (e.g., 255 of Figure 2) to allow the technician to continue working hands-free. Moreover, the 3D models retrieved may be projected holographically to enable the technician to view the engine and its components from any angle. When animations illustrating the disassembly process are identified, these animations may also be projected to help the technicians in following the exact maintenance protocols.

At block 525, the HAMM device monitors for any feedback from the technician regarding the accuracy or relevance of the displayed information. The feedback may be provided through voice inputs. The feedback may comprise a confirmation, indicating that the information is accurate, or an error signal, indicating that there are discrepancies or that the information is not relevant.

At block 530, following the reception of feedback, the HAMM device determines if the retrieved data has been confirmed as accurate by the technician. If confirmed, the method 500 proceeds to block 540. If not confirmed and the technician indicates an error or discrepancy, the method 500 proceeds to block 535, where the HAMM device instructs to update the CMS database based on the feedback. The update may involve revising the tags and links to ensure they accurately reflect the current information and are effectively interconnected. For example, if a discrepancy relates to a specific aircraft part that is incorrectly categorized, the tags associated with that part and links to related documentation may be updated to escalate, record and correct the error. After updating, the method 500 returns to block 510, where the HAMM device reprocesses the query to generate new search commands, and receive corrected or additional data from the CMS server.

At block 540, the HAMM checks if there are any requests from the technician to adjust the display settings of the holographic projection. These adjustments may include zooming in or out, scrolling up or down, rotating the display, turning pages, and the like. These adjustments may be initiated through voice commands or hand gestures. If such adjustments are received, the method 500 proceeds to block 545, where the HAMM device adjusts the projection accordingly to meet the specific needs or preferences of the technician. If no adjustments are received, the current query cycle is complete. The method 500 returns to block 505 to handle another round of queries. The loop allows the technician to modify the display as needed and enables continuous interaction for subsequent queries.

In some aspects, the HAMM device may detect the technician's distance and viewing angle, and adjust the display settings automatically. For example, when the technician gets closer to the projection, the device may automatically enlarge certain details for clearer viewing. When the technician moves further away from the projection, the device may reduce the scale to provide a broader view of the information. Additionally, as the technician walks around the workspace, the projection may be automatically rotated to maintain the best possible view for the technician. In some aspects, the HAMM device may store individual preferences for display settings. When the technician accesses the system again, the device may automatically adjust the projection display settings based on these saved preferences.

In some aspects, the HAMM device may also support remote expert assistance, which enables experts from distant locations to provide assistance for maintenance tasks that require specialized knowledge beyond the standard information provided in manuals. This feature is particularly useful for unique or complex maintenance issues that cannot be resolved through generic procedures. In such configurations, an expert may access the CMS database remotely to retrieve and review the relevant information, such as text instructions, 3D models, or animations. Once the expert has understood the requirements of the task, the expert may assist to address the maintenance challenges. These can directly ease the process with the on-site technician (e.g., via a network interface), and displayed within a holographic projection for easy follow-up and understanding.

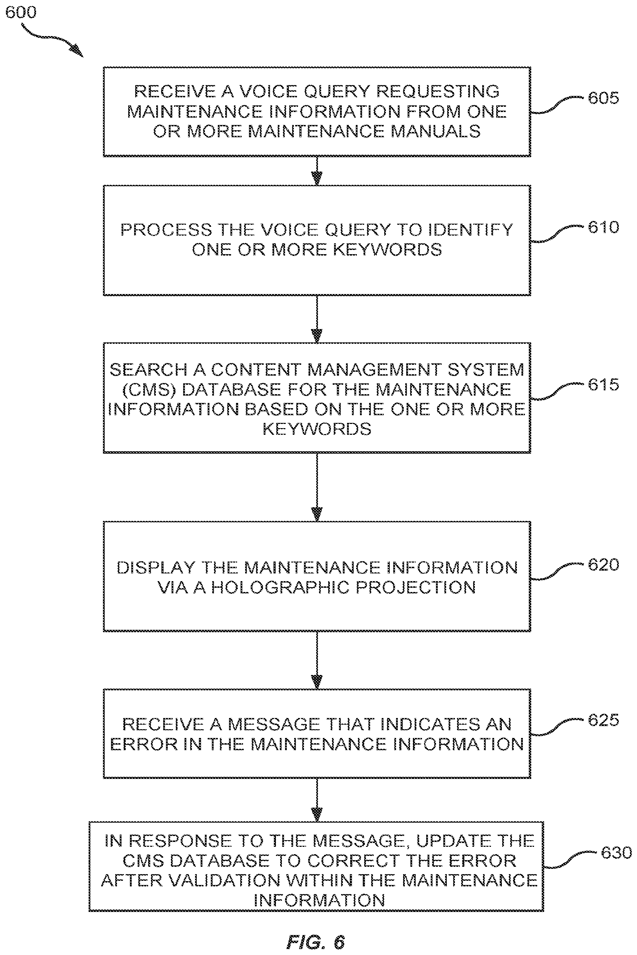

Figure 6 is a flow diagram depicting an example method 600 for manual data retrieval and holographic display generation, according to some aspects of the present disclosure.

At block 605, a computing device (e.g., 110 of Figure 1C) receives a voice query (e.g., 205 of Figure 2) requesting maintenance information from one or more maintenance manuals (e.g., 160-180 of Figure 1A).

At block 610, the computing device processes the voice query to identify one or more keywords.

At block 615, the computing device searches a content management system (CMS) database (e.g., 185 of Figure 1B) for the maintenance information (e.g., 225, 230 and 235 of Figure 2) based on the one or more keywords. In some aspects, the maintenance information may comprise at least one of a text instruction (e.g., 225 of Figure 2), a three-dimensional (3D) model (e.g., 230 of Figure 2), or an animation (e.g., 235 of Figure 2), each related to an equipment part or a maintenance procedure as described within the one or more maintenance manuals.

At block 620, the computing device displays the maintenance information via a holographic projection (e.g., 310A-310E of Figures 3A-3E).

At block 625, the computing device receives a message (e.g., 260 of Figure 2) that indicates an error in the maintenance information. In some aspects, the message may comprise at least one of a voice input or a hand gesture input.

At block 630, in response to the message, the computing system updates the CMS database to correct the error after validation within the maintenance information.

In some aspects, the CMS database may be generated by converting the one or more maintenance manuals (e.g., 160-180 of Figure 1A) into digital documents, assigning tags to the digital documents, where the tags represent content categories of the digital documents, comprising at least one of aircraft model numbers, equipment part names, maintenance actions, and establishing links between the digital documents based on the assigned tags.

In some aspects, the computing device may receive a second message (e.g., 260 or 265 of Figure 2) that instructs to adjust the holographic display interface, comprising at least one of zooming in or out on parts of the 3D models or text instructions, rotating the 3D models to expose different views and angles, repositioning the 3D models to avoid overlap, navigating through the text instructions, and controlling a pace of animations.

In some aspects, the computing device may automatically adjust the holographic projection based on at least one of a current view angle or distance of a user, or stored historical preferences of the user.

In some aspect, to process the voice query to identify one or more keywords, the computing device may convert spoken words within the voice query into text using automatic speech recognition, and extract the one or more keywords by analyzing the text using natural language processing (NPL) techniques.

In some aspects, the computing system may update the maintenance information based on instructions given by a user, where the instructions comprises modifications of 3D models or editing text instructions for a respective equipment part, and share the updated maintenance information with a second user via a network interface.

Figure 7 depicts an example computing device 700 configured to perform various aspects of the present disclosure, according to some aspects of the present disclosure. Although depicted as a physical device, in some aspects, the computing device 700 may be implemented using virtual device(s), and/or across a number of devices (e.g., in a cloud environment). In some aspects, the computing device may correspond to the HAMM device 110 as depicted in Figure 1C.

As illustrated, the computing device 700 includes a CPU 705, memory 710, storage 715, one or more network interfaces 725, and one or more I/O interfaces 720. In the illustrated aspect, the CPU 705 retrieves and executes programming instructions stored in memory 710, as well as stores and retrieves application data residing in storage 715. The CPU 705 is generally representative of a single CPU and/or GPU, multiple CPUs and/or GPUs, a single CPU and/or GPU having multiple processing cores, and the like. The memory 710 is generally considered to be representative of a random access memory. Storage 715 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some aspects, I/O devices 735 (such as keyboards, monitors, etc.) are connected via the I/O interface(s) 720. Further, via the network interface 725, the computing device 700 can be communicatively coupled with one or more other devices and components (e.g., via a network, which may include the Internet, local network(s), and the like). As illustrated, the CPU 705, memory 710, storage 715, network interface(s) 725, and I/O interface(s) 720 are communicatively coupled by one or more buses 730.

In the illustrated aspect, the memory 710 includes a voice input component 750, a CMS management component 755, a holographic projection component 760, a voice output component 765, and a hand gesture recognition component 770. Although depicted as discrete components for conceptual clarity, in some aspects, the operations of the depicted components (and others not illustrated) may be combined or distributed across any number of components. Further, although depicted as software residing in memory 710, in some aspects, the operations of the depicted components (and others not illustrated) may be implemented using hardware, software, or a combination of hardware and software.

In one aspect, the voice input component 750 may capture and process voice queries from the technician. The voice input component 750 may use speech recognition technology to convert spoken words into digital text. Following the conversion, the voice input component 755 may apply NLP to understand the technician's intent and extract relevant keywords for data retrieval. In one aspect, the CMS management component 755 may handle all interactions with the CMS. The CMS management component may send search commands, generated based on the extracted keywords from voice queries, to a CMS server, instructing the server to search for specific maintenance information within its database. When receiving user feedback that indicates discrepancies or updates, the CMS management component 755 may instruct the CMS server to update its database to escalate, record, and correct errors and/or refine data for improved accuracy and efficiency. In one aspect, the holographic projection component 760 may convert the retrieved data from the CMS database into holographic projections. In one aspects, the voice output component 760 may convert text data, retrieved from the CMS database, into audible speech. The text data may include instructions that describe specific maintenance procedures, operational guidelines, or safety protocols. In one aspect, the hand gesture recognition component 770 may interpret hand gestures provided by technicians to adjust holographic projections. The hand gesture recognition component 770 allows technicians to interact with the holographic projections through natural movements, adjusting the scale, orientation, or specific views of the holographic displays without physical contact.

In the illustrated example, the storage 715 may include a variety of data for effective operation and management of the HAMM system, including, but not limited to, maintenance manuals and documentations, 3D models and animations, and historical user preferences for display settings. In some aspects, the aforementioned data may be saved in a remote database that connects to the computing device 700 via a network (e.g., the Internet).

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Further examples are set out in the clauses below:
1. A method, comprising: receiving a voice query requesting maintenance information from one or more maintenance manuals; processing the voice query to identify one or more keywords; searching a content management system (CMS) database for the maintenance information based on the one or more keywords;
   displaying the maintenance information via a holographic projection; receiving a message that indicates an error in the maintenance information; and
   in response to the message, updating the CMS database to correct the error after validation within the maintenance information.
2. The method of clause 1, wherein the maintenance information comprises at least one of a text instruction, a three-dimensional (3D) model, or an animation, each related to an equipment part or a maintenance procedure as described within the one or more maintenance manuals.
3. The method of clause 1 or 2, wherein the message comprises at least one of a voice input or a hand gesture input.
4. The method of any one of the preceding clauses, wherein the CMS database is generated by: converting the one or more maintenance manuals into digital documents; assigning tags to the digital documents, wherein the tags represent content categories of the digital documents, comprising at least one of aircraft model numbers, equipment part names, maintenance actions; and
   establishing links between the digital documents based on the assigned tags.
5. The method of clause 2, further comprising receiving a second message that instructs to adjust the holographic projection, comprising at least one of:
   zooming in or out on parts of the 3D models or text instructions, rotating the 3D models to expose different views and angles, repositioning the 3D models to avoid overlap, navigating through the text instructions, and controlling a pace of animations.
6. The method of any one of the preceding clauses, further comprising automatically adjusting the holographic projection based on at least one of a current view angle or distance of a user, or stored historical preferences of the user.
7. The method of any one of the preceding clauses, wherein processing the voice query to identify one or more keywords comprises: converting spoken words within the voice query into text using automatic speech recognition; and
   extracting the one or more keywords by analyzing the text using natural language processing (NPL) techniques.
8. The method of any one of the preceding clauses, further comprising:
   updating the maintenance information based on instructions given by a user, wherein the instructions comprises modifications of 3D models or editing text instructions for a respective equipment part; and
   sharing the updated maintenance information with a second user via a network interface.
9. A system comprising: one or more computer processors; and
   one or more memories collectively containing one or more programs, which, when executed by the one or more computer processors, perform operations, the operations comprising: receiving a voice query requesting maintenance information from one or more maintenance manuals; processing the voice query to identify one or more keywords; searching a content management system (CMS) database for the maintenance information based on the one or more keywords; displaying the maintenance information via a holographic projection; receiving a message that indicate an error in the maintenance information; and in response to the message, updating the CMS database to correct the error after validation within the maintenance information.
10. The system of clause 9, wherein the maintenance information comprises at least one of a text instruction, a three-dimensional (3D) model, or an animation, each related to an equipment part or a maintenance procedure as described within the one or more maintenance manuals.
11. The system of clause 9 or 10, wherein the message comprises at least one of a voice input or a hand gesture input.
12. The system of any one of clauses 9-11, wherein the CMS database is generated by:
   converting the one or more maintenance manuals into digital documents;
   assigning tags to the digital documents, wherein the tags represent content categories of the digital documents, comprising at least one of aircraft model numbers, equipment part names, maintenance actions; and
   establishing links between the digital documents based on the assigned tags.
13. The system of clause 10, wherein the one or more programs, which, when executed by the one or more computer processors, perform the operations further comprising receiving a second message that instructs to adjust the holographic projection, comprising at least one of: zooming in or out on parts of the 3D models or text instructions, rotating the 3D models to expose different views and angles, repositioning the 3D models to avoid overlap, navigating through the text instructions, and controlling a pace of animations.
14. The system of any one of clauses 9-13, wherein the one or more programs, which, when executed by the one or more computer processors, perform the operations further comprising automatically adjusting the holographic projection based on at least one of a current view angle or distance of a user, or stored historical preferences of the user.
15. The system of any one of clauses 9-14, wherein to process the voice query to identify one or more keywords, the one or more programs, which, when executed by the one or more computer processors, perform the operations comprising: converting spoken words within the voice query into text using automatic speech recognition; and extracting the one or more keywords by analyzing the text using natural language processing (NPL) techniques.
16. The system of any one of clauses 9-15, wherein the one or more programs, which, when executed by the one or more computer processors, perform the operations further comprising: updating the maintenance information based on instructions given by a user, wherein the instructions comprises modifications of 3D models or editing text instructions for a respective equipment part; and
   sharing the updated maintenance information with a second user via a network interface.
17. One or more computer-readable media containing, in any combination, computer program code that, when executed by operation of a computer system, performs operations comprising: receiving a voice query requesting maintenance information from one or more maintenance manuals; processing the voice query to identify one or more keywords; searching a content management system (CMS) database for the maintenance information based on the one or more keywords;
   displaying the maintenance information via a holographic projection;
   receiving a message that indicate an error in the maintenance information; and
   in response to the message, updating the CMS database to correct the error after validation within the maintenance information.
18. The one or more computer-readable media of clause 17, wherein the maintenance information comprises at least one of a text instruction, a three-dimensional (3D) model, or an animation, each related to an equipment part or a maintenance procedure as described within the one or more maintenance manuals.
19. The one or more computer-readable media of clause 17 or 18, wherein the message comprises at least one of a voice input or a hand gesture input.
20. The one or more computer-readable media of clause 19, wherein the CMS database is generated by: converting the one or more maintenance manuals into digital documents; assigning tags to the digital documents, wherein the tags represent content categories of the digital documents, comprising at least one of aircraft model numbers, equipment part names, maintenance actions; and
   establishing links between the digital documents based on the assigned tags.

While the foregoing is directed to aspects of the present disclosure, other and further aspects of the disclosure may be devised without departing from the basic scope thereof, and the scope thereof is determined by the claims that follow.

## Claims

1. A method, comprising:
receiving a voice query (205) requesting maintenance information from one or more maintenance manuals;
processing the voice query (205) to identify one or more keywords;
searching a content management system (CMS) database (220) for the maintenance information (225-235) based on the one or more keywords;
displaying the maintenance information via a holographic projection (250);
receiving a message (260) that indicates an error in the maintenance information; and
in response to the message, updating the CMS database (220) to correct the error after validation within the maintenance information.

2. The method of claim 1, wherein the maintenance information comprises at least one of a text instruction (225), a three-dimensional (3D) model (230), or an animation (235), each related to an equipment part or a maintenance procedure as described within the one or more maintenance manuals.

3. The method of claim 1 or 2, wherein the message comprises at least one of a voice input (260) or a hand gesture input (265).

4. The method of any one of the preceding claims, wherein the CMS database is generated by:
converting the one or more maintenance manuals (155) into digital documents;
assigning tags to the digital documents, wherein the tags represent content categories of the digital documents, comprising at least one of aircraft model numbers, equipment part names, maintenance actions; and
establishing links between the digital documents based on the assigned tags.

5. The method of claim 2, further comprising receiving a second message (265) that instructs to adjust the holographic projection, comprising at least one of:
zooming in or out on parts of the 3D models or text instructions,
rotating the 3D models to expose different views and angles,
repositioning the 3D models to avoid overlap,
navigating through the text instructions, and
controlling a pace of animations.

6. The method of any one of the preceding claims, further comprising automatically adjusting the holographic projection (250) based on at least one of a current view angle or distance of a user, or stored historical preferences of the user.

7. The method of any one of the preceding claims, wherein processing the voice query (205) to identify one or more keywords comprises:
converting spoken words within the voice query into text using automatic speech recognition; and
extracting the one or more keywords by analyzing the text using natural language processing (NPL) techniques.

8. The method of any one of the preceding claims, further comprising:
updating the maintenance information based on instructions given by a user, wherein the instructions comprises modifications of 3D models or editing text instructions for a respective equipment part; and
sharing the updated maintenance information with a second user via a network interface.

9. A system comprising:
one or more computer processors; and
one or more memories collectively containing one or more programs, which, when executed by the one or more computer processors, perform operations, the operations comprising:
receiving a voice query (205) requesting maintenance information from one or more maintenance manuals;
processing the voice query (205) to identify one or more keywords;
searching a content management system (CMS) database (220) for the maintenance information (225-235) based on the one or more keywords;
displaying the maintenance information via a holographic projection (250);
receiving a message (260) that indicates an error in the maintenance information; and
in response to the message, updating the CMS database (220) to correct the error after validation within the maintenance information.

10. The system of claim 9, wherein the maintenance information comprises at least one of a text instruction (225), a three-dimensional (3D) model (230), or an animation (235), each related to an equipment part or a maintenance procedure as described within the one or more maintenance manuals; or optionally
wherein the message comprises at least one of a voice input (260) or a hand gesture input (265).

11. The system of claim 9 or 10, wherein the CMS database is generated by:
converting the one or more maintenance manuals (155) into digital documents;
assigning tags to the digital documents, wherein the tags represent content categories of the digital documents, comprising at least one of aircraft model numbers, equipment part names, maintenance actions; and
establishing links between the digital documents based on the assigned tags;
and optionally
wherein the one or more programs, which, when executed by the one or more computer processors, perform the operations further comprising receiving a second message (265) that instructs to adjust the holographic projection, comprising at least one of:
zooming in or out on parts of the 3D models or text instructions,
rotating the 3D models to expose different views and angles,
repositioning the 3D models to avoid overlap,
navigating through the text instructions, and
controlling a pace of animations.

12. The system of claim 9, wherein the one or more programs, which, when executed by the one or more computer processors, perform the operations further comprising automatically adjusting the holographic projection (250) based on at least one of a current view angle or distance of a user, or stored historical preferences of the user; or optionally
wherein to process the voice query (205) to identify one or more keywords, the one or more pro grams, which, when executed by the one or more computer processors, perform the operations comprising:
converting spoken words within the voice query into text using automatic speech recognition; and
extracting the one or more keywords by analyzing the text using natural language processing (NPL) techniques; or optionally
wherein the one or more programs, which, when executed by the one or more computer processors, perform the operations further comprising:
updating the maintenance information based on instructions given by a user,
wherein the instructions comprises modifications of 3D models or editing text instructions for a respective equipment part; and
sharing the updated maintenance information with a second user via a network interface.

13. One or more computer-readable media containing, in any combination, computer program code that, when executed by operation of a computer system, performs operations comprising:
receiving a voice query (205) requesting maintenance information from one or more maintenance manuals;
processing the voice query (205) to identify one or more keywords;
searching a content management system (CMS) database (220) for the maintenance information (225-235) based on the one or more keywords;
displaying the maintenance information via a holographic projection (250);
receiving a message (260) that indicates an error in the maintenance information; and
in response to the message, updating the CMS database (220) to correct the error after validation within the maintenance information.

14. The one or more computer-readable media of claim 13, wherein the maintenance information comprises at least one of a text instruction (225), a three-dimensional (3D) model (230), or an animation (235), each related to an equipment part or a maintenance procedure as described within the one or more maintenance manuals.

15. The one or more computer-readable media of claim 13, wherein the message comprises at least one of a voice input (260) or a hand gesture input (265); and optionally
wherein the CMS database is generated by:
converting the one or more maintenance manuals (155) into digital documents;
assigning tags to the digital documents, wherein the tags represent content categories of the digital documents, comprising at least one of aircraft model numbers, equipment part names, maintenance actions; and
establishing links between the digital documents based on the assigned tags.
